# EUROPÄISCHE PATENTSCHRIFT

(11) **EP 3 094 440 B1**
(45) Veröffentlichungstag und Bekanntmachung des Hinweises auf die Patenterteilung: **29.08.2018**
(21) Anmeldenummer: 15703221.0
(22) Anmeldetag: 13.01.2015
(51) Int. Cl.: B23D 23/00, B23D 33/00

(54) **VERFAHREN ZUR ERZEUGUNG VON DURCHGÄNGEN IN EINEM METALLISCHEN KÖRPER MITTELS HOCHGESCHWINDIGKEITSSCHERSCHNEIDEN UND VERWENDUNG DAFÜR**
PASSAGES PRODUCTING METHOD INTO A METALLIC BODY BY SHEARING AND USE THEREFORE
PROCÉDÉ DE RÉALISATION DE PASSAGES PAR CISAILLAGE ET UTILISATION DUDIT

(30) Priorität: 15.01.2014 DE 102014000299
(43) Veröffentlichungstag der Anmeldung: 23.11.2016
(73) Patentinhaber: Rixen, Wolfgang, 42699 Solingen (DE); Pies, Gerrit, 42699 Solingen (DE)
(72) Erfinder: RIXEN, Wolfgang, 42699 Solingen (DE); PIES, Gerrit, 42699 Solingen (DE); GEISLER, Tobias, 45549 Sprockhövel (DE)
(74) Vertreter: BRP Renaud & Partner mbB Rechtsanwälte Patentanwälte Steuerberater
(86) Internationale Anmeldenummer: PCT/EP2015/000038
(87) Internationale Veröffentlichungsnummer: WO 2015/106961

(56) Entgegenhaltungen:
- WO-A1-2013/167232
- DE-A1- 2 311 713
- DE-A1-102007 019 911
- DE-A1-102010 007 955
- DE-U1-202009 003 666
- GB-A- 1 155 324
- US-B1- 6 370 773

## Beschreibung

Die Erfindung betrifft ein Verfahren zur Erzeugung von Durchgängen In einem metallischen Körper, mittels Hochgeschwindigkeltsscherschneiden mit geschlossener Schnittlinie, im weiteren Verlauf mit HGSS bezeichnet.
Weiter betrifft die Erfindung die Verwendung des Verfahrens zur Erstellung von Durchgangslöchern in Nutensteinen.

Bei den erzeugten Produkten kann es sich um aus dem metallischen Körper herausgestanzte Konturkörper oder aber um Durchgangsformen handeln. Der metallische Körper kann flach oder uneben sein oder eine gewölbte Oberfläche aufweisen.

Ein Verfahren zur adiabatischen Trennung von Werkstücken mittels Hochgeschwindigkeitsscherschneiden (HGSS) ist aus der DE 103 17 185 A1 bekannt.

Diese Druckschrift offenbart ein Verfahren zur Herstellung von Profilteilen durch Trennen aus Profilstangen. Dabei wird die Profilstange in ein Werkzeug zwischen zwei Aktivteilen eingespannt, wobei die zugewandte Auflagenseite der Aktivteile in Form von Matrizen ausgestaltet sind, bei denen jeweils die Form des zu bearbeitenden Profils ausgespart ist. Weiter weisen die Größen der Auflageseiten die Abmessungen des zu schneidenden Profilteils auf. Schließlich erfolgt die Trennung adiabatisch bei einer sehr hohen Auftreffgeschwindigkeit des Schnittstempels, wobei die Kraft über den Stößel auf ein Aktivteil eingeleitet wird.

Das dort beschriebene Verfahren wird zum Ablängen einer Vielzahl von genannten Profilen (siehe In DE 103 17 185 in § 6) verwandt.

Hier handelt es sich also ausschließlich um Trennen von Profilen, bei denen keine Bohrungen vorgesehen sind. Insbesondere sind dabei auch keine Durchgänge vorgesehen.

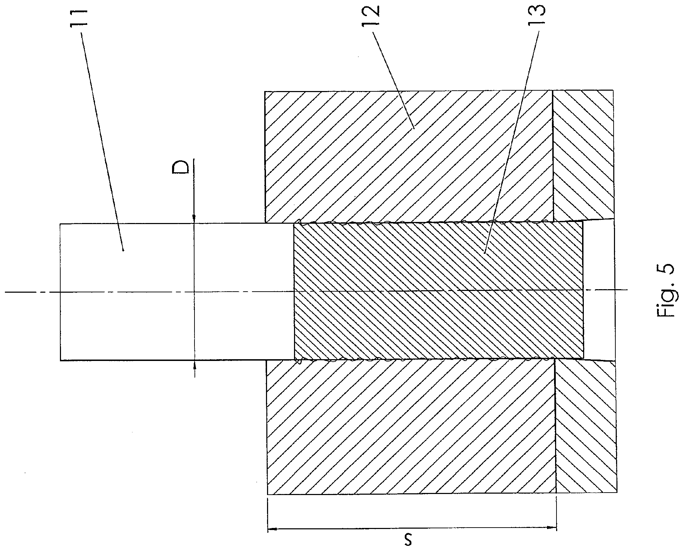

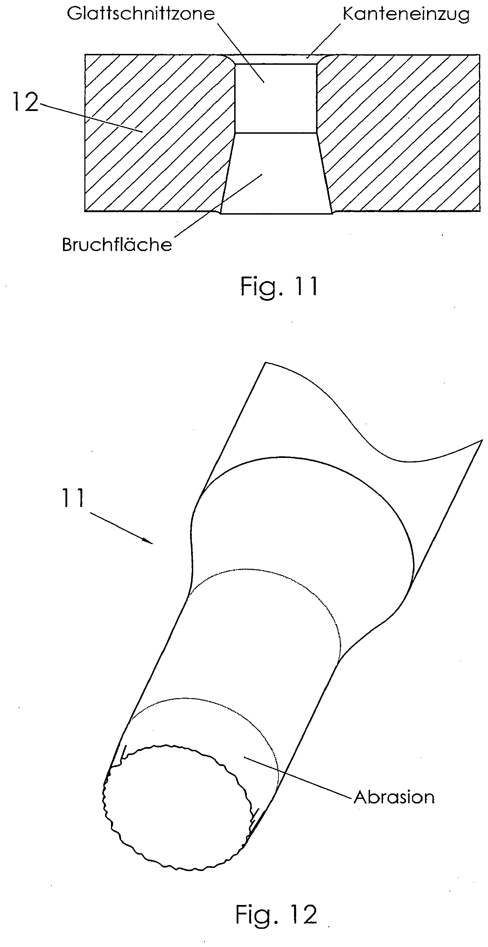

Wie beim konventionellen Stanzen kommt es auch beim HGSS zu Verschleiß durch Adhäsion und in Folge durch Abrasion im Bereich der Werkzeugmantelfläche, was In Fig. 12 gezeigt ist. Die sich beim HGSS durch Ausnutzen des adiabatischen Werkstoffzustandes ergebende Bruchlinie oder Bruchfläche, welche sich unter der Wirkfläche des Werkzeugs in Impulsausbreitungsrichtung erstreckt, streut statistisch in Richtung des Lochs und des umgehenden Materials, wie in Fig. 5 gezeigt. Durch diese Streuung, ohne den beim konventionellen Stanzen bekannten, trichterförmigen Ausbruch, siehe Fig. 11, ergeben sich beim Durchtauchen des HGSS-Stempels hohe Adhäsionskräfte zwischen Stempel und Durchgangswandung, welche den Verschleiß durch Abrasion beschleunigen. Hierdurch kann eine im Vergleich zum konventionellen Stanzen geringere Standzeit, insbesondere des Stempels, auftreten. Ein Durchtauchen des Stempels ist nach dem bisher bekannten Stand der Technik erforderlich.

Das Gebrauchsmuster DE 20 2009 003 666 U1 offenbart eine Vorrichtung zur Bearbeitung, insbesondere zum Stanzen, eines Werkstücks, insbesondere eines Bandmaterials, die mindestens ein zyklisch druckbeaufschlagbares Oberwerkzeug aufweist, dass in einer Halteplatte angeordnet und in einer Führungsplatte verschiebbar geführt ist, wobei das Oberwerkzeug verschiebbar in der Halteplatte angeordnet ist und die Vorrichtung eine Steuereinrichtung aufweist, durch die nach Beendigung des Bearbeitungsvorgangs eine Entkopplung des Oberwerkzeugs gegenüber der Abwärtsbewegung der Halteplatte auslösbar ist.

Der Erfindung liegt daher die Aufgabe zugrunde, ein Verfahren der eingangs genannten Art derart zu verbessern, dass mit technisch einfachen Mitteln die Standzeit insbesondere des Stempels deutlich erhöht wird.

Dies geschieht beim Verfahren der eingangs genannten Art gemäß Anspruch 1, dadurch, dass
ein Stempel mit den Durchgängen entsprechenden ersten Abmessungen bis zu einer Eintauchtiefe eingebracht wird, bei der der Bruch in Wirkrichtung des Stempels durch den gesamten metallischen Körper unter Ausbildung eines Butzens hindurchgeht, dann die Hubbewegung gestoppt und der Stempel wieder zurückgezogen wird, und dass in einem Folgeschritt der sich noch im Durchgang befindliche Butzen mittels eines Auswerfers, der eine geringere zweite Abmessung als der Stempel aufweist, aus dem Durchgang herausgetrieben wird,

Der Kern der vorliegenden Erfindung ist das bis jetzt bekannte Verfahren zum Stanzen mittels HGSS soweit zu verändern, dass dabei das eigentliche Generieren des Durchgangs und das Ausstoßen des Butzens voneinander getrennt durchgeführt werden.

Es wird daher ein Verfahren gemäß Anspurch 1 vorgeschlagen, bei welchem eine besondere Eigenschaft des HGSS ausgenutzt wird. Wie eingangs beschrieben, läuft der Bruch bereits bei geringer Stempeleintauchtiefe durch den kompletten Werkstückquerschnitt hindurch, Hiermit ist die eigentliche Entstehung des Lochs soweit abgeschlossen, dass die entsprechenden Materialien voneinander getrennt sind. Sobald dieser Punkt erreicht ist. wird die Hubbewegung des Stempels gestoppt und der Stempel zurückgezogen. In einem nachgestalteten Verfahrensschritt wird Innerhalb des gleichen Werkzeugs oder davon getrennt der sich noch im Durchgang befindliche Butzen mittels eines Auswerfers ausgestoßen. Dieser hat gegenüber dem eigentlichen Stempel eine kleinere Abmessung, wodurch keinerlei Kontakt zwischen seiner Mantelfläche und der Wandung des Stanzloches oder Durchgang besteht. Somit wird der erhöhte Verschleiß des Stempels durch Adhäsion vermieden,

Gemäß einer Weiterbildung der Erfindung ist es vorteilhaft, dass der Auswerfer seine Hubbewegung gleichzeitig mit dem Stempel und mit dem gleichen Antrieb durchführt. Dadurch können Stempel und Auswerfer gleichzeitig arbeiten. Es kann aber auch vorgesehen werden, dass der mindestens eine Auswerfer seine Hubbewegung unabhängig von der Hubbewegung des Stempels durchführt. Dadurch wird es möglich, weiter entfernt von der Maschine eine weitere Maschine zu verwenden, die deutlich geringere Leistungen benötigt.

Besonders vorteilhaft ist es, wenn der Butzen selbst das herzustellende Produkt Ist oder der durch den Butzen freigegebene Durchgang selbst dem herzustellenden Produkt die gewünschte Kontur verleiht,

Des weiteren kann vorgesehen werden, dass das HGSS auch von einer gewölbten Oberfläche aus erfolgt.

Weiter wie es im Anspruch 6 beansprucht wird, betrifft die Erfindung die Verwendung dieses Verfahrens zur Erstellung von Durchgangslöchern in Nutensteinen.

Weitere Vorteile und Merkmale der Erfindung ergeben sich aus der folgenden Beschreibung mehrerer Ausführungsbeispiele sowie aus den Zeichnungen, auf die Bezug genommen wird. Es zeigen:
Fig.1 bis Fig.5 das bisherige Verfahren zur Erzeugung eines Durchgangs in einem metallischen Körper, mittels Hochgeschwindigkeitsschneiden HGSS, wobei
Fig.1 die Situation vor dem Auftreffen des Stempels zeigt;
Fig.2 die vollständige Bruchausbildung eines Butzens bei einer geringen Eindringtiefe darstellt;
Fig.3 das weitere Ausschieben des Butzens mittels des Stempels unter hoher Umfangspressung zeigt;
Fig.4 das Zurückziehen des Stempels unter hoher Reibung darstellt;
Fig.5 eine vergrößerte Detailansicht gemäß Fig.3 mit skizzenhaften Verwerfungen zwischen Stempel und dem Durchgangsloch zeigt;

Die Fig. 6 bis 10 nunmehr das verbesserte Verfahren und die Fig. 11 und 12 den Stand der Technik zeigen, wobei:

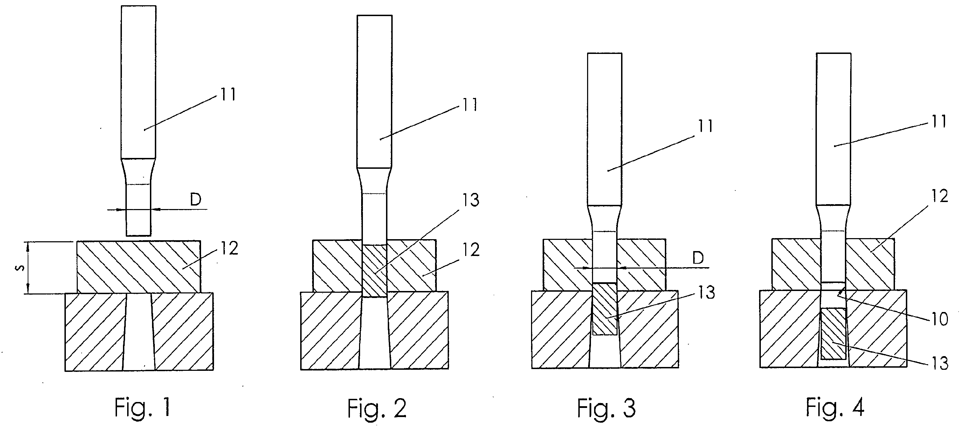

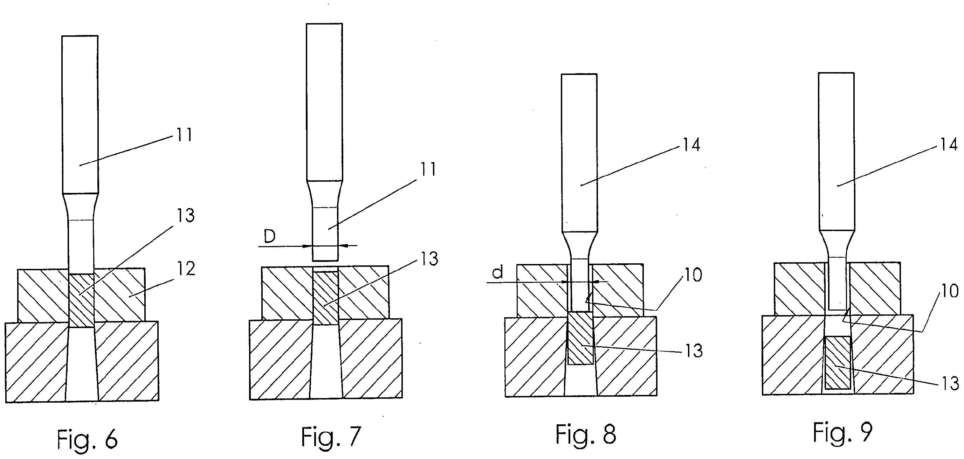

Flg.6 eine der Fig.2 ähnliche Ansicht darstellt, mit bereits eingedrungenem Stempel;
Fig.7 die Position des zurückgezogenen Stempels kurz nach dem Zustand gemäß Fig.6 zeigt;
Fig.8 einen In dem Durchgang eingeführten Auswerfer darstellt, der eine geringere Abmessung als der Stempel aufweist;
Fig.9 den nunmehr fertigen Durchgang, wobei allerdings der Auswerfer 14 noch nicht zurückgezogen ist;

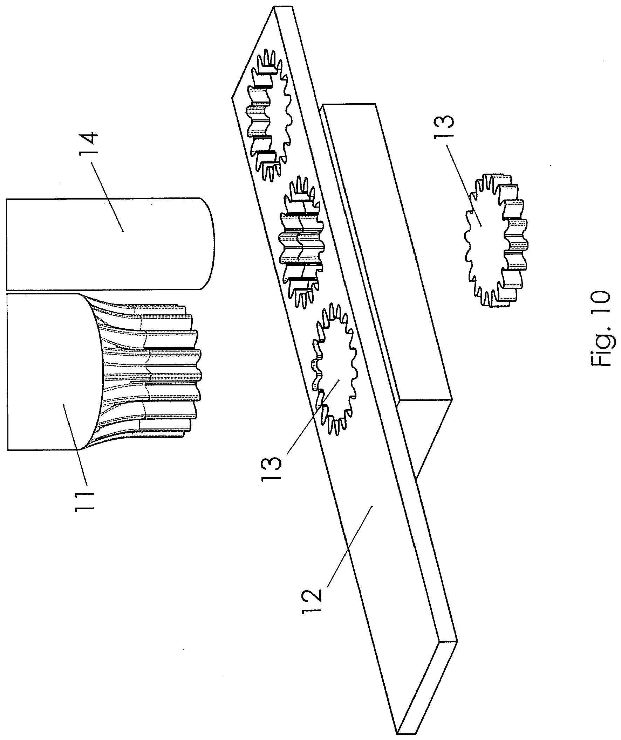

Fig.10 eine perspektivische Darstellung des Verfahrens zur Erzeugung von Durchgängen, wobei hier als das zu produzierende Werkstück der sogenannte Butzen als Zahnrad ausgebildet ist;
Fig.11 einen Querschnitt durch ein Durchgangsloch hergestellt durch konventionelles Stanzes zeigt; und
Fig.12 eine perspektivische Darstellung eines Stempels mit Abrasion.

Anhand der Fig. 1 bis 12 werden nunmehr das bekannte Verfahren zur Erstellung eines Durchgangs 10 in einem metallischen Körper 12 mittels HGSS und das Verfahren zur Erzeugung eines Durchgangs 10 unter Zuhilfenahme eines Auswerfers 14 näher beschrieben. Dabei werden für beide Verfahren die gleichen Bezugszeichen verwandt, sofern nichts anderes ausgesagt wird.

Bei dem bekannten Verfahren trifft ein Stempel 11 mit sehr hoher Geschwindigkeit auf einen metallischen Körper 12 auf. Dies ist in der Figur 1 so dargestellt, dass die Stirnfläche des Stempels 11 kurz vor dem Eintritt in die Oberfläche des Werkstücks 12 gezeigt ist.

Gemäß Fig.2 ist der Stempel 11 geringfügig in den metallischen Körper 12 eingedrungen und hat schon vollständig einen sogenannten Butzen 13 aufgrund des HGSS erzeugt. Dieser Butzen 13 Ist schon vollständig von dem übrigen metallischen Körper 12 getrennt. Es ist daher festzuhalten, dass schon bei einer geringen Eintauchtiefe in Wirkrichtung des Stempels 11 durch den gesamten Körper 12 hindurch der Bruch zwischen den Materialien vorhanden ist.

Bei dem weiteren Eintauchen bzw. Durchtauchen des Stempels 11, wird der Butzen 13 aus dem Körper 12 entfernt. Wie aus den Fig. 3 bis 5 entnehmbar, wobei die Fig. 5 eine Vergrößerung der Fig.3 darstellt, kommt es auch beim HGSS durch Adhäsion und in Folge durch Abrasion im Bereich der Werkzeugmantelfläche zum Verschleiß, siehe dazu insbesondere die Fig.5. Die etwas gewellten Linien zwischen dem Stempel 11 und dem Körper 12 sollen die sich belm HGSS durch Ausnutzen des adiabatischen Werkstoffzustandes ergebende Bruchlinie skizzieren, welche sich unter der Wirkfläche des Werkzeugs bzw, Stempels 11 in Impulsausbreitungsrichtung erstreckt und streut sich statistisch gesehen In Richtung des Durchgangslochs 10 und des umgebenden Materials des Körpers 12.

Durch diese Streuung, ohne den beim konventionellen Stanzen bekannten trichterförmigen Ausbruch gemäß Fig.11 ergeben sich bei dem Durchtauchen des Stempels 11 hohe Adhäsionskräfte zwischen dem Stempel 11 und der Wandung des Durchgangs 10, welche den Verschleiß durch Abrasion beschleunigen, wie in Fig.12 gezeigt.

Bei dem nunmehr verbesserten Verfahren des oben genannten Verfahrens zum Stanzen mittels HGSS, werden das eigentliche Generieren des Durchgangs 10 und das Ausstoßen des Butzens 13 voneinander getrennt. Dies ist ersichtlich aus den Fig. 6 und 7, die die Erzeugung des Butzens 13 und das Zurückziehen des Stempels 11 zeigen. Dabei ist noch festzustellen, dass eine erste Abmessung D an dem Stempel 11 sehr genau der lichten Weite bzw. des Durchmessers des Durchgangs 10 entspricht.

Anhand der Fig.8 ist erkennbar, dass ein Auswerfer 14 mit einer zweiten geringeren Abmessung d den beim kurzen Eintauchen des Stempels 11 schon erzeugten Butzen 13 durch den Durchgang 10 hindurchgeschoben und somit ausgeworfen hat.

Die Fig.9 zeigt die Endstellung mit entferntem Butzen 13 und vollständig hergestelltem Durchgang 10.

In Fig.10 ist beispielhaft die erfindungsgemäße Erzeugung eines Durchgangs 10 (Fig.4) dargestellt. Hier wird der mittels HGSS gebildete Butzen in Form eines Zahnrades 13 genutzt. Die Stempel mit geschlossener Schnittlinie können aber beliebig ausgebildet sein, so dass statt des Butzens 13 der ihn ehemals umgebende metallische Körper 12 das Werkstück bildet.

Mit Hilfe des erfindungsgemäßen Verfahrens ist es nunmehr möglich, in einer viel geringeren Zelt ein metallisches Werkstück mit einem Durchgang zu versehen und die Standzeit der Werkzeuge zu erhöhen.

### Bezugszeichenliste:

- 10: Durchgang
- 11: Stempel
- 12: metallischer Körper
- 13: Butzen, Zahnrad
- 14: Auswerfer
- D: erste Abmessung
- d: zweite Abmessung

## Patentansprüche

1. Verfahren zur Erzeugung von Durchgängen (10) in einem metallischen Körper (12) mittels Hochgeschwindigkeitsscherschneiden (HGSS) mit geschlossener Schnittlinie, **dadurch gekennzeichnet, dass** ein Stempel (11) mit einer den Durchgängen (10) entsprechenden ersten Abmessung (D) bis zu einer Eintauchtiefe eingebracht wird, bei der der Bruch in Wirkrichtung des Stempels (11) durch den gesamten metallischen Körper (12) unter Ausbildung eines Butzens (13) hindurchgeht, dann die Hubbewegung gestoppt und der Stempel (11) wieder zurückgezogen wird, und dass In einem Folgeschritt der sich noch im Durchgang (10) befindliche Butzen (13) mittels eines Auswerfers (14), der eine geringere zweite Abmessung (d) als der Stempel (11) aufweist, aus dem Durchgang (10) herausgetrieben wird.

2. Verfahren nach Anspruch 1, **dadurch gekennzeichnet, dass** der Auswerfer (14) seine Hubbewegung gleichzeitig mit dem Stempel (11) und mit dem gleichen Antrieb durchführt.

3. Verfahren nach Anspruch 1, **dadurch gekennzeichnet, dass** der eine Auswerfer (14) seine Hubbewegung unabhängig von der Hubbewegung des Stempels (11) oder seine Hubbewegung mittels eines eigenen Antriebs durchführt.

4. Verfahren nach einem der Ansprüche 1 bis 3, **dadurch gekennzeichnet, dass** der Butzen (13) selbst das herzustellende Produkt Ist oder der durch den Butzen (13) freigegebene Durchgang (10) selbst dem herzustellenden Produkt die gewünschte Kontur verleiht.

5. Verfahren nach einem der Ansprüche 1 bis 4, **dadurch gekennzeichnet, dass** das Hochgeschwindigkeitsscherschneiden auch von einer gewölbten Oberfläche aus erfolgt.

6. Verwendung des Verfahrens nach einem der vorstehenden Ansprüche 1 bis 5 zur Erstellung von Durchgangslöchern in Nutensteinen (18).

## Claims

1. Method for creating through-passages (10) in a metal body (12) by means of highspeed impact cutting (HSIC) with a closed cutting line, **characterized in that** a punch (11) having a first dimension (D) corresponding to the through-passages (10) is introduced down to an insertion depth at which the break passes through the entire metal body (12) in the direction of action of the punch (11), forming a slug (13); that then the stroke movement is stopped and the punch (11) is withdrawn again; that in a subsequent step the slug (13), which is still located in the through-passage (10), is driven out of the through-passage (10) by means of an ejector (14), which has a smaller second dimension (d) than the punch (11).

2. Method according to claim 1, **characterised in that** the ejector (14) performs its stroke movement simultaneously with the punch (11) and with the same drive.

3. Method according to claim 1, **characterised in that** the one ejector (14) performs its stroke movement independently of the stroke movement of the punch (11) or performs its stroke movement by means of its own drive.

4. Method according to any one of claims 1 to 3, **characterised in that** the slug (13) itself is the product to be produced or the through-passage (10) cleared by the slug (13) itself gives the product being produced the desired contour.

5. Method according to any one of claims 1 to 4, **characterised in that** the highspeed impact cutting is also done from a domed surface.

6. Use of the method according to any one of the preceding claims 1 to 5, to make through-passage holes in T-slot nuts (18).

## Revendications

1. Procédé de production de passages (10) dans un corps métallique (12) par cisaillement à grande vitesse (HGSS) avec une ligne de coupe fermée, **caractérisé en ce qu'**un poinçon (11) d'une première dimension (D) correspondant aux passages (10) est introduit jusqu'à une profondeur de pénétration, à laquelle la rupture dans le sens d'action du poinçon (11) traverse tout le corps métallique (12) en formant un bouchon (13), puis le mouvement de levage est arrêté et le poinçon (11) est retiré, et que dans une étape suivante, le bouchon (13) se trouvant encore dans le passage (10) est extrait du passage (10) au moyen d'un éjecteur (14), qui présente une deuxième dimension (d) inférieure à celle du poinçon (11).

2. Procédé selon la revendication 1, **caractérisé en ce que** l'éjecteur (14) effectue son mouvement de levage en même temps avec le poinçon (11) et avec le même entraînement.

3. Procédé selon la revendication 1, **caractérisé en ce que** l'un éjecteur (14) effectue son mouvement de levage indépendamment du mouvement de levage du poinçon (11) ou son mouvement de levage au moyen d'un propre entraînement.

4. Procédé selon l'une quelconque des revendications 1 à 3, **caractérisé en ce que** le bouchon (13) proprement dit est le produit à fabriquer ou le passage (10) proprement dit libéré par le bouchon (13) confère au produit à fabriquer le contour souhaité.

5. Procédé selon l'une quelconque des revendications 1 à 4, **caractérisé en ce que** le cisaillement à grande vitesse se fait aussi depuis une surface voûtée.

6. Utilisation du procédé selon l'une quelconque des revendications précédentes 1 à 5 pour la réalisation de trous traversants dans des coulisseaux (18).
